# EUROPÄISCHE PATENTSCHRIFT

(11) **EP 0 892 478 B1**
(45) Veröffentlichungstag und Bekanntmachung des Hinweises auf die Patenterteilung: **22.09.2004**
(21) Anmeldenummer: 98111424.2
(22) Anmeldetag: 22.06.1998
(51) Int. Cl.: H02G 3/18

(54) **Unterflur-Geräteeinsatz mit einem schwenkbeweglich gelagerten Deckel**
Floor outlet with hinged cover
Prise de sol avec couvercle à charnière

(30) Priorität: 18.07.1997 DE 29712728 U
(43) Veröffentlichungstag der Anmeldung: 20.01.1999
(73) Patentinhaber: Novar GmbH, 72458 Albstadt (DE)
(72) Erfinder: Mellies, Nils-Ove, 51674 Wiehl (DE); Müller, Siegfried, 51709 Marienheide (DE)
(74) Vertreter: Patentanwälte Ruff, Wilhelm, Beier, Dauster & Partner

(56) Entgegenhaltungen:
- EP-A- 0 648 001
- GB-A- 2 176 065
- GB-A- 2 241 389

## Beschreibung

Die Erfindung betrifft einen Unterflur-Geräteeinsatz mit einem an einem Rahmen schwenkbeweglich gelagerten Deckel sowie mit einer Verriegelungseinrichtung zur Verriegelung des Deckels in seiner geschlossenen Stellung, die ein verrastbares Halteelement aufweist, dem wenigstens zwei Raststellen derart zugeordnet sind, dass bei Arretierung des Halteelementes in einer ersten Raststelle der Deckel in seiner geschlossenen Stellung, bei Arretierung des Halteelementes in einer zweiten Raststelle der Deckel in einer geöffneten Stellung, in der er als Schnurauslass dient, gehalten ist.

Aus der Patentschrift EP 0 648 000 B1 ist ein Unterflur-Geräteeinsatz mit einem schwenkbar an einem Schutzrahmen angeordneten Deckel bekannt. Der Deckel weist einen beweglichen Schnurauslasstubus und ferner eine Verriegelungseinrichtung auf, mittels derer er in seiner geschlossenen Position arretierbar ist. Die Arretierung erfolgt über eine federbelastete schwenkbeweglich am Deckel angebrachte Klinke, die in eine fest mit dem Schutzrahmen verbundene Öse einrastet, wenn der Deckel in seine geschlossene Position gebracht wird.

Aus der britischen Offenlegungsschrift GB 21 76 065 A ist ein Unterflur-Geräteeinsatz mit einem an einem Rahmen schwenkbeweglich gelagerten Deckel bekannt, bei der der Deckel mit einem aufklappbaren Schnurauslass versehen ist. Der Schnurauslass ist in Form einer schwenkbaren Klappe vorgesehen und kann in einer ersten Stellung, in der er bündig zur Bodenoberfläche angeordnet ist, sowie in einer zweiten, aufgeklappten Stellung arretiert werden.

Aus der britischen Offenlegungsschrift GB 22 41 389 A ist ein Unterflur-Geräteeinsatz mit einem an einem Rahmen schwenkbeweglich gelagerten Deckel bekannt, bei dem in dem Deckel mehrere Schnurauslässe vorgesehen sind. Die Schnurauslässe können in einer geschlossenen und einer geöffneten Stellung arretiert werden.

Aus der europäischen Offenlegungsschrift EP 0 648 001 A2 ist ein Unterflur-Geräteeinsatz mit einem an einem Rahmen schwenkbeweglich gelagerten Deckel bekannt, bei dem der Deckel in einer geöffneten Stellung mittels eines federnden Dichtungsprofils gehalten wird, das in der geöffneten Stellung an einem passenden Absatz des Rahmens angreift. Der Deckel ist mit einem aufklappbaren Schnurauslass versehen.

Aufgabe der Erfindung ist es, einen Unterflur-Geräteeinsatz der eingangs genannten Art zu schaffen,der sowohl in seiner geschlossenen als auch geöffneten Stellung automatisch arretierbar ist.

Diese Aufgabe wird dadurch gelöst, dass das Halteelement federbelastet linear und parallel zur Ebene des Deckels beweglich am Deckel gelagert ist und einen Rasthaken aufweist, der unter der Federwirkung in als Raststellen dienende Ausnehmungen einer Kulissenführung selbsttätig einrastbar ist, die als Teil eines Gegenstücks unbeweglich am Rahmen festgelegt sind. Damit wird eine automatische Arretierung des Deckels sowohl in der geschlossenen, als auch in einer geöffneten Position gewährleistet und es ergibt sich ein günstiger Eingriff des Halteelementes in die Kulissenführung. Auch wird zum einen eine Fixierung des Deckels in seiner geschlossenen Stellung und damit ein zuverlässiger Schutz der installierten Elektroinstallationsgeräte ermöglicht. Zum anderen lässt sich der Deckel auch in einer teilweise geöffneten Stellung arretieren, in der er als Schnurauslass dient, wodurch ein gesonderter Schnurauslass entfallen kann.

In weiterer Ausgestaltung der Erfindung weist das Halteelement ein Bedienungselement auf, das durch eine Aussparung im Deckel zugänglich ist, und über das das Halteelement gegen die Federkraft aus einer Raststelle heraus bewegbar ist. Dadurch lässt sich auf einfache Weise eine manuelle Lösung der Arretierung bewerkstelligen.

In weiterer Ausgestaltung der Erfindung ist das Halteelement parallel zur Schwenkachse des Deckels geführt. Dadurch kann auf ergonomisch günstige Weise gleichzeitig die Arretierung gelöst und der Deckel verschwenkt werden. In weiterer Ausgestaltung der Erfindung ist zwischen Deckel und Gehäuse eine umlaufende, elastische Dichtung vorgesehen, die bei Arretierung des Halteelementes in der ersten Raststelle von dem geschlossenen Deckel unter Druckbelastung gesetzt ist. Durch diese Anordnung ist der Unterflur-Geräteeinsatz wasserdicht verschließbar und somit für naß zu reinigende Fußböden geeignet. Dabei wird die Elastizität der Dichtung zur Unterstützung des Öffnens des Deckels ausgenutzt.

In weiterer Ausgestaltung der Erfindung ist zwischen Deckel und Rahmen wenigstens eine Aufstellfeder vorgesehen, die bei geschlossenem Deckel unter Spannung gesetzt ist. Dadurch wird das Öffnen des Deckels von der Federkraft der Aufstellfeder unterstützt, wobei Federweg und Federkonstante weitgehend frei wählbar sind.

Weitere Vorteile und Merkmale der Erfindung ergeben sich aus den Unteransprüchen sowie aus der nachfolgenden Beschreibung eines Ausführungsbeispiels der Erfindung, das anhand der Zeichnungen dargestellt ist.
- Fig. 1: zeigt in einem Schnitt eine Ausführungsform eines erfindungsgemäßen Unterflur-Geräteeinsatzes mit einem an einem Rahmen schwenkbeweglich gelagerten Dekkel, wobei der Deckel in seiner geschlossenen Stellung dargestellt ist,
- Fig. 2: in einem Schnitt einen Rahmen mit zugehörigem Deckel ähnlich dem in Fig. 1, wobei der Rahmen einen zusätzlichen Teppichschutzflansch aufweist, und der Deckel in einer geöffneten Stellung dargestellt ist, in der er als Schnurauslaß dient,
- Fig. 3: in einer Funktionsskizze verschiedene Positionen eines als Halteelement dienenden Riegels in der Seitenansicht III in Fig. 1,
- Fig. 4: in einer Explosionsdarstellung den Riegel mit einem zugehörigen Einbauteil und den Deckel des UnterflurGeräteeinsatzes in der Draufsicht IV in Fig. 1, und
- Fig. 5: in einem Schnitt ein Detail eines Rahmens mit zugehörigem Deckel ähnlich dem in Fig. 1, wobei zur Unterstützung des Öffnens des Deckels eine Aufstellfeder zwischen Deckel und Rahmen vorgesehen ist.

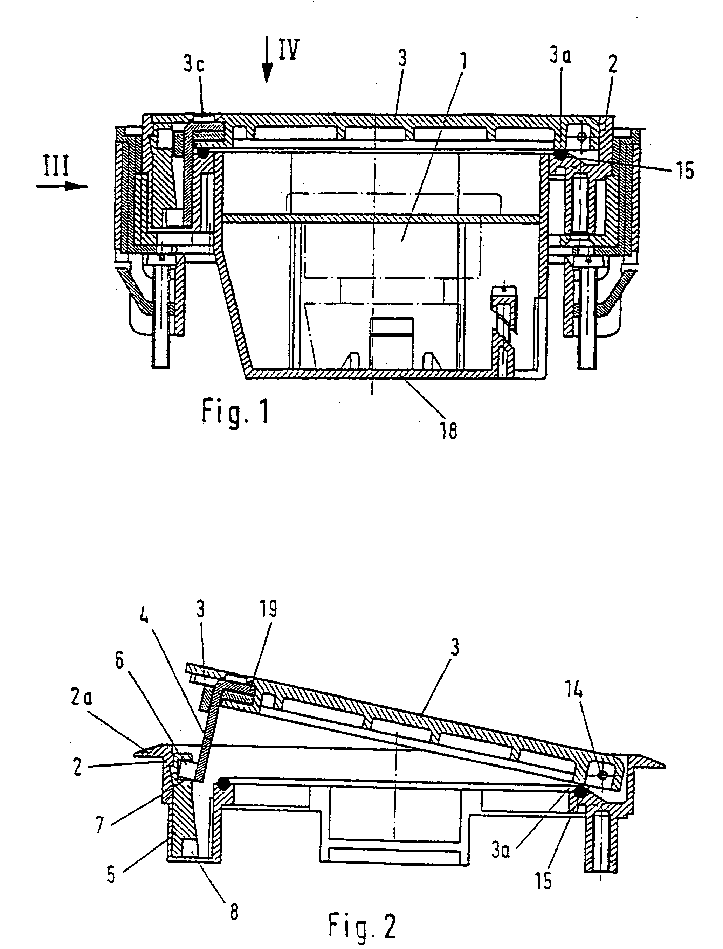

In Fig. 1 ist ein Unterflur-Geräteeinsatz 1 dargestellt, der derart in die Aussparung eines Fußbodens einsetzbar ist, daß die Oberkante eines innerhalb des Unterflur-Geräteeinsatzes 1 höhenverstellbaren Rahmens 2 bündig mit der Fußbodenoberfläche abschließt. Die Querschnittsform des Unterflurgeräteeinsatzes einschließlich des Rahmens ist vorzugsweise rund, kann jedoch auch in beliebiger Weise eckig gewählt werden. In einem Gerätebecher 18 des Unterflur-Geräteinsatzes sind mehrere Elektroinstallationsgeräte angeordnet, die in den Zeichnungen nicht näher dargestellt sind. Im übrigen erfolgt der Einbau des Unterflur-Geräteeinsatzes in einen Fußboden in herkömmlicher Weise, weshalb darauf nicht weiter eingegangen wird.

Die oberseitige Öffnung des Rahmens 2 ist durch einen Deckel 3 verschließbar, der um eine in eingebautem Zustand horizontale Schwenkachse 14 am Rahmen 2 schwenkbar gehalten ist. In Fig. 1 ist der Deckel 3 in seiner geschlossenen Stellung dargestellt, in der er einerseits im eingebauten Zustand sowohl bündig mit dem Rahmen 2, als auch mit dem Fußboden abschließt und andererseits eine umlaufende Dichtung 15 mit seiner inneren Dichtfläche 3a gegen den Rahmen 2 drückt. Hierdurch ergibt sich eine besonders für naß zu reinigende Fußböden geeignete wasserdichte Anordnung, die bereits aus der Patentschrift EP 0 648 000 B1 bekannt ist.

Die Darstellung in Fig. 2 beschränkt sich auf ein geringfügig modifiziertes Ausführungsbeispiel eines erfindungsgemäßen Rahmens 2, der in Abwandlung zu dem Rahmen 2 gemäß Fig. 1 einen Teppichschutzflansch 2a aufweist, der im eingebauten Zustand auf dem Fußboden aufsitzt.

Auf der der Schwenkachse 14 gegenüberliegenden Seite ist eine Verriegelungsvorrichtung 4 bis 11 vorgesehen, mittels derer der Deckel sowohl in seiner in Fig. 1 dargestellten geschlossenen Stellung, als auch in der in Fig. 2 dargestellten geöffneten Stellung formschlüssig arretierbar ist. Dazu weist die Verriegelungsvorrichtung einen am Deckel 3 gelagerten, vorzugsweise steif aus Stahlblech ausgeführten Riegel 4 auf, der als Halteelement für den Deckel dient. An seiner Oberseite weist der Riegel 4 einen Führungsabschnitt 19 und an seiner Unterseite einen Rasthaken 6 auf.

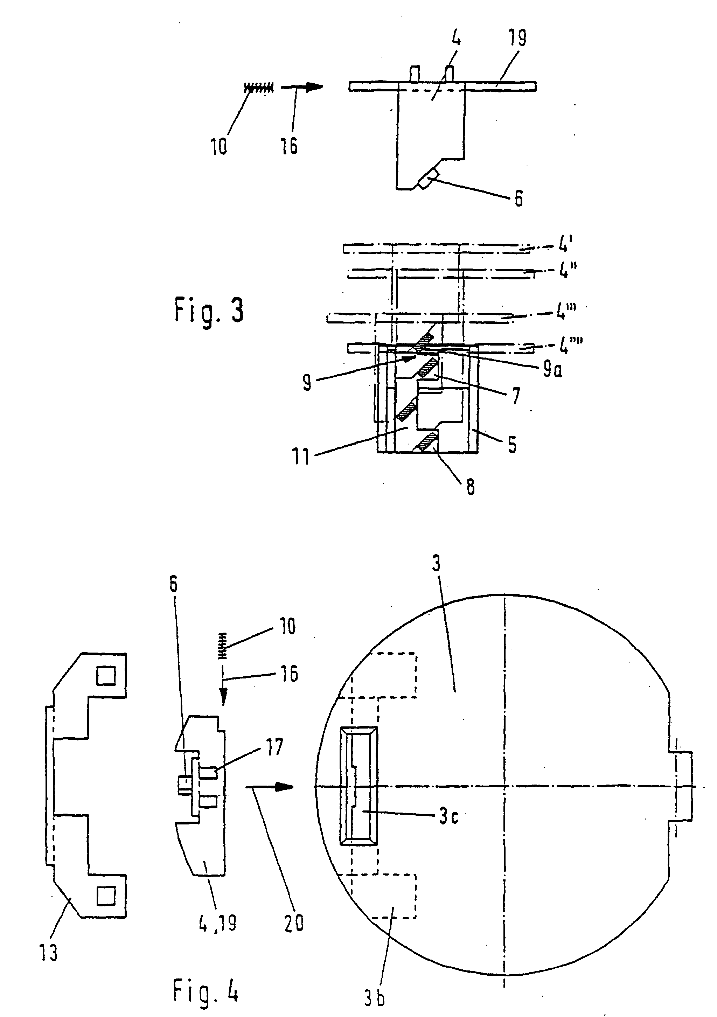

Der Führungsabschnitt 19 ist in einer Aufnahmetasche 3b des Deckels 3 parallel zur Deckelebene linear verschiebbar gelagert. Eine unter Vorspannung ebenfalls in der Aufnahmetasche 3b angeordnete Feder 10 belastet den Führungsabschnitt 19 einseitig mit der entsprechenden Federkraft in Richtung des Pfeiles 16. Aus der Draufsicht in Fig. 4 ist entnehmbar, wie der Führungsabschnitt 19 über die Feder 10 gegen das Einbauteil 13 zu verspannen und in Richtung des Pfeiles 20 in die Aufnahmetasche 3b des Deckels 3 zu stecken ist. Dabei werden zwei an dem Führungsabschnitt 19 angebrachte Bedienungswarzen 17 in eine Aussparung 3c in der Oberseite des Deckels 3 eingepaßt, so daß der Riegel 4 über sie von oben bedienbar ist. Das Einbauteil 13 verrastet bei der Montage in nicht näher dargestellter Weise im Deckel, wodurch die erläuterte Anordnung gegen Herausfallen gesichert ist. Durch die Belastung des Führungsabschnittes 19 mit der Federkraft in Richtung des Pfeiles 16 wird der Riegel 4 in eine bezüglich des Deckels äußere Ruheposition gedrückt, in der die Feder so weit wie möglich entspannt ist. In Fig. 3 nimmt der Riegel 4 in den Positionen 4'' und 4'''', in denen der Riegel am weitesten rechts positioniert ist, jeweils diese Ruheposition bezüglich des Deckels ein.

Der Rasthaken 6 des Riegels 4 greift bei einer Stellung des Deckels zwischen den in den Figuren 1 und 2 dargestellten Stellungen in die Kulissenführung 7, 8, 11 seines Gegenstücks 5 ein, in der er dann formschlüssig geführt ist. Der Rasthaken ist vorzugsweise als Blechfortsatz des Riegels 4 hergestellt, der schräg zu den Bewegungsrichtungen des Riegels angeordnet und lotrecht nach außen von diesem abragend gebogen ist. Aus der Fig. 3 sind die Anordnung und Ausgestaltung des Rasthakens 6 am Riegel 4 sowie in strichpunktierter Darstellung verschiedene Positionen 4' bis 4'''' des Riegels samt Rasthaken gegenüber dem Gegenstück 5 ersichtlich, das die Kulissenführung beinhaltet.

Die Kulissenführung 7, 8, 11, ist Bestandteil des Gegenstücks 5, das fest mit dem Rahmen 2 verbunden und vorzugsweise aus Kunststoff hergestellt ist, und in der Ansicht gemäß Fig. 3 C-förmig ausgeprägt. Sie umfaßt eine als erste Raststelle für den Rasthaken 6 dienende untere Ausnehmung 8 sowie eine als zweite Raststelle dienende obere Ausnehmung 7, die durch einen vertikal verlaufenden Abschnitt 11 miteinander verbunden sind. Die obere Ausnehmung wird durch einen Einführungsabschnitt 9, der eine abgeschrägte Anlauffläche 9a aufweist, nach oben abgeschlossen. Die abgeschrägte Anlauffläche 9a korrespondiert mit dem schräg orientierten Rasthaken 6, wie aus Fig. 3 entnehmbar ist.

Ausgehend von einem vollständig aufgeklappten Deckel 3 ist aus Fig. 3 die Wirkungsweise der erfindungsgemäßen Verriegelung ersichtlich. Bei einem Zuklappen des Deckels 3 greift zunächst das untere Ende des Riegels 4, an dem der Rasthaken 6 angebracht ist in den Einführungsabschnitt 9 der Kulissenführung ein. Der Rasthaken 6 stößt in dieser Position 4' gegen die abgeschrägte Anlauffläche des Einführungsabschnitts, wodurch bei einer weiteren Schließbewegung des Deckels der Riegel 4 entgegen der Richtung des Pfeiles 16 und damit entgegen der Federkraft 10 aus seiner Ruheposition ausgelenkt wird. Nachdem dann der Rasthaken die Einführung 9 in vertikaler Richtung bei gleichzeitiger Querverschiebung des Riegels 4 passiert hat, gleitet er unter der Federeinwirkung in die obere Ausnehmung 7 und nimmt die Position 4'' ein. In dieser Lage befindet sich der Riegel 4 wieder in seiner bezüglich des Deckels äußeren Ruheposition, wobei er nun in der Kulissenführung formschlüssig arretiert und somit an dem Gegenstück 5 festgelegt ist. Diese Position 4'' des Riegels 4 entspricht der in Fig. 2 dargestellten Stellung von Deckel und Riegel. Durch den Zwischenraum zwischen Deckel 3 und Rahmen 2 können nunmehr elektrische Anschlußleitungen geführt werden, wobei der Deckel zuverlässig in dieser Stellung festgelegt ist.

Die Arretierung kann ausschließlich dadurch aufgehoben werden, daß der Riegel 4, insbesondere über die Betätigungswarzen 17, entgegen der Richtung des Pfeiles 16 gegen die Kraft der Feder 10 aus seiner äußeren Ruheposition herausbewegt wird, wodurch der Rasthaken 6 in den mittleren Führungsabschnitt der Kulissenführung (Position 4''') oder zurück in Position 4' gelangt, so daß eine Schwenkbewegung des Deckels erneut möglich wird.

Bei einer Fortsetzung der Schließbewegung des Deckels 3 bei abgezogenen Anschlußleitungen gleitet der Rasthaken ausgehend von Position 4''' weiter durch die Kulissenführung, wobei er, sobald der Deckel seine geschlossene Stellung erreicht hat, unter der Kraft der gespannten Feder 10 in die untere Ausnehmung 8 gelangt. In dieser Position 4'''', die derjenigen von Fig. 1 entspricht, ergibt sich erneut eine formschlüssige Arretierung des Riegels 4 in der Kulissenführung des Gegenstücks 5, so daß der Deckel in dieser Lage verriegelt ist. Die Verriegelung kann abermals dadurch aufgehoben werden, daß der Riegel 4 gegen die Kraft der Feder 10 ausgelenkt wird bis er in den mittleren Abschnitt 11 der Kulissenführung gelangt, so daß die Schwenkbewegung des Deckels 3 freigegeben wird.

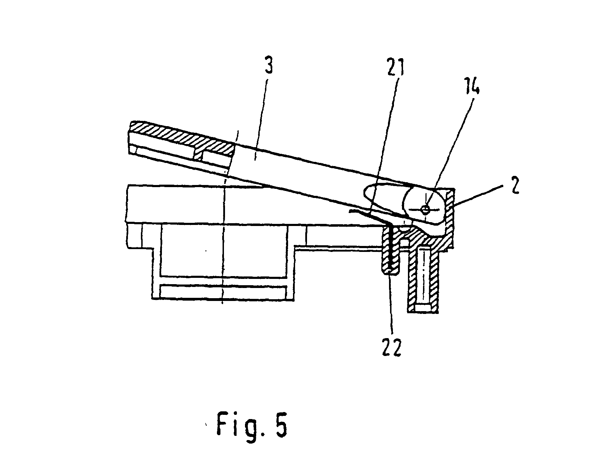

In Fig. 5 ist ein weiteres modifiziertes Ausführungsbeispiel des Rahmens 2 gemäß Fig. 1 dargestellt. Das genannte Ausführungsbeispiel weist zusätzlich eine Aufstellfeder 21 zwischen Deckel und Rahmen auf, die, wie in Fig. 5 dargestellt, in eine Aufnahmetasche 22 des Rahmens in der Nähe der Schwenkachse 14 eingesetzt ist und beim Schließen des Deckels unter Biegespannung gesetzt wird. Solange der Riegel in seiner Position 4'''' arretiert und damit der Deckel in seiner geschlossenen Position verriegelt ist, verbleibt die Aufstellfeder 21 unter Spannung. Nach Entriegelung und Freigabe der Schwenkbewegung des Deckels läßt sich dieser allein durch die Kraft der Aufstellfeder 21 um einen vom Federweg und der Federkonstanten der Aufstellfeder abhängigen Winkel verschwenken, so daß der Riegel 4 in die Position 4''' gelangt. Auf diese Weise wird das Öffnen des Deckels wirkungsvoll unterstützt.

## Patentansprüche

1. Unterflur-Geräteeinsatz mit einem an einem Rahmen schwenkbeweglich gelagerten Deckel (3) sówie mit einer Verriegelungseinrichtung zur Verriegelung des Deckels in seiner geschlossenen Stellung, die ein verrastbares Halteelement (4) aufweist, dem wenigstens zwei Raststellen (7, 8) derart zugeordnet sind, dass bei Arretierung des Halteelementes in einer ersten Raststelle (8) der Deckel (3) in seiner geschlossenen Stellung, bei Arretierung des Halteelementes in einer zweiten Raststelle (7) der Deckel in einer geöffneten Stellung, in der er als Schnurauslass dient, gehalten ist,
**dadurch gekennzeichnet, dass**
das Halteelement (4) federbelastet linear und parallel zur Ebene des Deckels beweglich am Deckel gelagert ist und einen Rasthaken (6) aufweist, der unter der Federeinwirkung in als Raststellen dienende Ausnehmungen (7, 8) einer Kulissenführung (7, 8, 11) selbsttätig einrastbar ist, die als Teil eines Gegenstücks (5) unbeweglich am Rahmen festgelegt sind.

2. Unterflur-Geräteeinsatz nach Anspruch 1, **dadurch gekennzeichnet, dass** das Halteelement (4) ein Bedienungselement (17) aufweist, das durch eine Aussparung (3c) im Deckel zugänglich ist, und über das das Halteelement gegen die Federkraft aus einer Raststelle heraus bewegbar ist.

3. Unterflur-Geräteeinsatz nach Anspruch 1, **dadurch gekennzeichnet, dass** das Halteelement (4) parallel zur Schwenkachse des Deckels (3) geführt ist.

4. Unterflur-Geräteeinsatz nach wenigstens einem der Ansprüche 1 bis 3, **dadurch gekennzeichnet, dass** zwischen Deckel (3) und Rahmen (2) eine umlaufende, elastische Dichtung (15) vorgesehen ist, die bei Arretierung des Halteelementes (4) in der Raststelle (8) von dem geschlossenen Deckel unter Druckbelastung gesetzt ist.

5. Unterflur-Geräteeinsatz nach wenigstens einem der Ansprüche 1 bis 4, **dadurch gekennzeichnet, dass** zwischen Deckel (3) und Rahmen (2) wenigstens eine Aufstellfeder (21) vorgesehen ist, die bei geschlossenem Deckel unter Spannung gesetzt ist.

## Claims

1. Underfloor appliance insert with a cover (3), which is pivotably mounted at a frame, and with a locking device for locking the cover in its closed position, which device comprises a latchable retaining element (4), with which at least two latching locations (7, 8) are associated such that, when the retaining element is arrested in a first latching location (8), the cover (3) is retained in its closed position, and when the retaining element is arrested in a second latching location (7), the cover is retained in an open position, in which it serves as a cord outlet,
**characterised in that**
the retaining element (4) is mounted in spring-loaded fashion at the cover such that it can move linearly and parallel to the plane of the cover and comprises a latching hook (6) which, under the spring action, can automatically latch into recesses (7, 8), which serve as latching locations, of a link guide (7, 8, 11) which is fixed in immobile fashion to the frame as part of a mating piece (5).

2. Underfloor appliance insert according to Claim 1, **characterised in that** the retaining element (4) comprises an operating element (17) which is accessible through an opening (3c) in the cover and via which the retaining element can be moved against the spring force out of a latching location.

3. Underfloor appliance insert according to Claim 1, **characterised in that** the retaining element (4) is guided parallel to the pivot axis of the cover (3).

4. Underfloor appliance insert according to at least one of Claims 1 to 3, **characterised in that** a circumferential, resilient seal (15) is provided between the cover (3) and the frame (2), which seal is subjected to a compressive load by the closed cover when the retaining element (4) is arrested in the latching location (8).

5. Underfloor appliance insert according to at least one of Claims 1 to 4, **characterised in that** at least one raising spring (21) is provided between the cover (3) and the frame (2), which spring is stressed when the cover is closed.

## Revendications

1. Insert d'appareil de sol avec un couvercle (3) logé d'une manière pivotante à un cadre et avec une installation de verrouillage pour verrouiller le couvercle dans sa position fermée, qui présente un élément de retenue encliquetable (4) auquel sont associés au moins deux emplacements d'encliquetage (7,8) de telle sorte que lors de l'arrêt de l'élément de retenue dans une première position encliquetée (8), le couvercle (3) est maintenu dans sa position fermée, lors de l'arrêt de l'élément de retenue dans une deuxième position encliquetée (7), le couvercle est retenu dans une position ouverte dans laquelle il sert de sortie de cordon,
**caractérisé en ce que** l'élément de retenue (4) est logé, sous la sollicitation d'un ressort, d'une manière linéaire et parallèle au plan du couvercle d'une manière mobile au couvercle et présente un crochet d'encliquetage (6) qui, sous l'effet du ressort, peut s'encliqueter automatiquement dans des évidements (7,8) d'un guidage de coulisse (7,8,11) servant d'emplacements d'encliquetage, qui sont fixés, en tant que partie d'une contre-pièce (5), d'une manière immobile au cadre.

2. Insert d'appareil de sol selon la revendication 1, **caractérisé en ce que** l'élément de retenue (4) présente un élément d'actionnement (17) qui est accessible à travers un évidement (3c) dans le couvercle, et par lequel l'élément de retenue peut être sorti contre la force de ressort d'une position encliquetée.

3. Insert d'appareil de sol selon la revendication 1, **caractérisé en ce que** l'élément de retenue (4) est guidé parallèlement à l'axe de pivotement du couvercle (3).

4. Insert d'appareil de sol selon au moins l'une des revendications 1 à 3, **caractérisé en ce qu'**il est prévu entre le couvercle (3) et le cadre (2) un joint d'étanchéité élastique (15) s'étendant tout autour qui, lors de l'arrêt de l'élément de retenue (4) dans l'emplacement d'encliquetage (8), est soumis par le couvercle fermé à une charge de pression.

5. Insert d'appareil de sol selon au moins l'une des revendications 1 à 4, **caractérisé en ce qu'**il est prévu entre le couvercle (3) et le cadre (2) au moins un ressort de dressage (21) qui, lorsque le couvercle est fermé, est mis sous contrainte.
